# EUROPÄISCHE PATENTANMELDUNG

(11) **EP 2 433 694 A1**
(43) Veröffentlichungstag der Anmeldung: **28.03.2012**
(21) Anmeldenummer: 10180876.4
(22) Anmeldetag: 28.09.2010
(51) Int. Cl.: B01D 39/16, D01D 5/00, B32B 5/26, D04H 3/16

(54) **Verfahren zur Herstellung eines Filterbauteils, Elektrospinnverfahren zur Herstellung eines Nanofaservlieses, sowie Verfahren zur Erhöhung der Kohäsion eines Nanofaservlieses**

(71) Anmelder: Evonik Fibres GmbH, 4860 Lenzing (AT)
(72) Erfinder: Pedersen, Andreas, 63486, Bruchköbel (DE); Schultheis, Friedel, 63594, Hasselroth (DE); Griesser, Herbert, 4840, Vöcklabruck (AT); Ungerank, Markus, 4320, Perg (AT)
(74) Vertreter: Wolf, Oliver

(57) **Zusammenfassung**

Für die industrielle Entstaubung von Abgasen hat sich der Schlauchfilter für die Abscheidung von Feststoffen seit Jahrzehnten bewährt. Eine moderne Form von Schlauchfiltern ist die Pulse-Jet Variante, welcher sich weitgehend als Standard durchgesetzt hat. Dabei wird wo der Filterkuchen mit Hilfe einer Druckstoßes entgegen der Strömungsrichtung entfernt. Für Hochtemperatur-Filtrationapplikationen ist die Auswahl von Filtermedien jedoch beschränkt, häufig eingesetzte Materialien sind z.B. PTFE, Aramid oder Glassfaser, wobei auf einem Substrat aufgetragene PTFE-Membran für Feinfiltration häufig die erste Wahl darstellt.

Die Aufgabe war es ein neuartiges Nanofaser-Hochtemperaturfiltermedium auf der Basis des Polyimids P84^{®} für die Feinfiltration zu entwickeln.

Für die Herstellung der Nanofaservliese wurde eine Elektrospinntechnologie verwendet.

Da das Filtermedium für Pulse-Jet Anwendungen entwickelt wurde, ist eine hohe Haftung zwischen dem Nanofaservlies und dem Substrat, das für die mechanische Stabilität zuständig ist, erforderlich.

## Beschreibung

### Gebiet der Erfindung

Staubabscheider, wie z.B. Taschen- oder Schlauchfilter bzw. Filterkerzen oder Zyklone, haben seit mehreren Jahrzehnten ihren festen Platz in der industriellen Entstaubung von Abgasen, bevor diese in nachfolgenden Prozessen eingesetzt werden oder in die Atmosphäre geleitet werden.

Aus der Vielfalt von Staubabscheidern, die für Staub-Gas-Trennverfahren zur Auswahl stehen, hat sich der Schlauchfilter für die Abscheidung von Feststoffen seit Jahrzehnten in verschiedensten industriellen Anwendungen bewährt. Dabei ist das Prinzip hinter dem Schlauchfilter gleich geblieben: Auf seinem Weg durch eine Filteranlage wird das Staubbeladene Gas (,Rohgas') durch ein Filtermedium geleitet und in seine Bestandteile (Staub und ,Reingas') getrennt. Nach Erreichen eines bestimmten Differenzdrucks oder nach Ablauf eines voreingestellten Zeitintervalls muss der Schlauchfilter gereinigt (,regeneriert') werden. Hierfür sind mehrere Abreinigungsverfahren möglich, wobei die modernste Form der Abreinigung der Pulse-Jet ist, der sich inzwischen weitgehend als Standard durchgesetzt hat. Bei der Pulse-Jet-Abreinigung wird ein intensiver Druckstoß (Puls) entgegen der Abgas-Strömungsrichtung freigesetzt. Demzufolge wird der Schlauchfilter kurz aufgebläht, der Filterkuchen durch Impulsübertragung abgelöst und die Strömungsrichtung kurz umgekehrt. Diese Abreinigung wird in den meisten Fällen on-line, also bei weiterlaufendem Funktionieren der Filteranlage, durchgeführt. Als Unterstützung der Abreinigung können die Schläuche während der Abreinigung auch gerüttelt werden. Hieraus kann abgeleitet werden, dass die Auswahl eines geeigneten Filtermediums bei der Auslegung einer Pulse-Jet-Filteranlage eine ganz entscheidende Rolle spielt.

Für Hochtemperatur-Filtrationsapplikationen, die mit thermisch und chemisch stabilen Filtermedien ausgestattet sind, ist die Auswahl von Filtermediummaterialien generell auf die Materialien Polytetraflourethylen (PTFE), Aramid, Glassfasern und Polyimid-Textilien beschränkt. Kommt dazu, die Anforderung an das Filtermedium auch sehr feine Staubpartikel bei hohen Abscheideraten entfernen zu müssen, ist der Einsatz eines einfachen Gewebes oder Nadelvlieses aus den oben genannten Materialien oft nicht ausreichend um die hohen Abscheideraten zu erreichen. Stattdessen kann das Filtermedium (Substrat) z.B. mit einer PTFE-Membran oder einer Feinstrukturlage, wie beispielsweise einem Nanofaservlies, an der Anströmseite des Filtermediums aufgebracht werden. Durch diese Beschichtung des Filtermediums an der Anströmseite steigt die Filtrationsleistung des Mediums und feinere Partikeln werden abgeschieden. Durch das Pulse-Jet-Abreinigungsverfahren ist eine hohe Haftung zwischen Substrat und Feinstrukturlage von sehr hoher Bedeutung, da sich sonst die Feinstrukturlage von dem Substrat trennt, wodurch die Feinfiltrationseigenschaften nicht mehr gegeben sind.

Die folgende Erfindung ist auf den Einsatz einer auf einem Substrat aufgetragenen Feinstrukturlage aus Polyimid (hergestellt und vertrieben von Evonik Fibers unter der Marke P84^{®}) für den Einsatz in Hochtemperatur-Entstaubungsapplikationen gerichtet.

### Stand der Technik

DE 699 13 969 (3M) betrifft ein Verfahren zur Herstellung von porösem kalzinierten Polyimid. Die Porosität des Kunststoffformkörpers ermöglicht es, durch Dotierung die physikalischen Eigenschaften des Kunststoffformkörpers, die Dielektrizitätskonstante anzupassen. Die Poren werden durch thermische Zersetzung von Polyethylenglycol erzeugt.

DE 697 28 384 (Teijin) beschreibt eine Zusammensetzung, die ein nicht kristallines Polyimid und einen aromatischen Polyester umfasst. Das Polyimid dient zur Verbesserung der Eigenschaften des Polyesters wie beispielsweise der Formbarkeit und Gasdichtigkeit.

US-PS 5,773,559 (Japan Synthetic Rubber Co.) beschreibt die Herstellung eines Blockcopolymers aus zwei unterschiedlichen Polyamidcarbonsäure-Einheiten, wobei die erste Polyamidcarbonsäure-Einheit aus einer Tetracarbonsäure sowie einem Diamin gebildet wird und die erste Polyamidcarbonsäure-Einheit freie Aminoendgruppen aufweist, und die zweite Polyamidcarbonsäure-Einheit ebenfalls aus einer Tetracarbonsäure und einem Diamin gebildet wird und die zweite Polyamidcarbonsäure-Einheit freie Carbonsäureendgruppen aufweist, diese beiden unterschiedlichen Polyamidcarbonsäure-Einheiten werden zum Polyamidcarbonsäure-Blockcopolymer umgesetzt. Nach der Imidisierung erhält man ein Polyimid-Blockcopolymer. Das Verfahren kann auch analog mit Polyimid-Blockcopolymeren durchgeführt werden und führt dann ohne zusätzlichen Imidierungsschritt zum Polyimid-Blockcopolymer. Das Verfahren kann ferner mit Diisocyanaten als verkappten Aminen durchgeführt werden, ebenso kann das Verfahren mit Polyamiden und Polyimiden durchgeführt werden. Die erhältlichen Blockcopolymere werden in Flüssigkristallformulierungen eingesetzt.

Hochtemperaturpolyimide (Erweichungspunkt > 300°C) sind als Pulver bzw. Formteile im Handel erhältlich. Die Produkte Vespel^{®} von DuPont, Meldin^{®} 7000 von Saint Gobain, Plavis^{®} von Daelim und Upimol^{®} von UBE sind nur als Formteile am Markt erhältlich, während das Produkt P84^{®} von Evonik Fibers als Pulver verkauft wird. Aus diesem Pulver stellt die Firma Ensinger Sintimid Formteile mit dem Markennamen SINTIMID^{®} her. Die ersten 3 Produkte sind chemisch ident, sie werden aus Pyromellithsäuredianhydrid und 4,4'-Diaminodiphenylether hergestellt. Upimol^{®} wird hergestellt aus Biphenyltertracarbonsäuredianhydrid und Diaminodiphenylether. P84^{®} unterscheidet sich in seiner Zusammensetzung von den 3 erstgenannten und weist einen Erweichungspunkt auf. Aufgrund der hohen Viskosität über dem Glaspunkt ist jedoch nur eine Verarbeitung nach dem Hot compression molding Verfahren möglich, Spritzguss und Extrusion sind nicht möglich.

Der Stand der Technik zur Pulse-Jet Filtration ist in Chemical Engineering 112 (2) pp. 42-49, 2005 (Amrit T. Agarwal) zusammnegefaßt, ferner in CIT Plus 10 (7) pp. 42-43, 2007 (Jochen Wittkamp) und in ZKG International 59 (10) pp. 82-87, 2006 (Frank Marmor).

Der Stand der Technik zur Lamination ist im Journal of Mechanical Engineering 52 (9) pp. 613-624, 2006 (Darko Drev) beschrieben.

### Aufgabe

Es bestand die Aufgabe, ein neuartiges Filtermedium auf der Basis von P84^{®}-Nanofasern für Pulse-Jet-Heißgasfiltrationsapplikationen zu entwickeln. Hierbei stand nicht nur die Produktentwicklung im Vordergrund, sondern auch die Entwicklung der Prozesse, mit denen das Filtermedium im Produktionsmaßstab hergestellt werden kann.

Die Hauptaufgaben waren:
- Entwicklung eines Produktionsverfahrens für die Herstellung von Nanofasern bzw. Nanofaservliesen auf der Basis von P84^{®}.
- Entwicklung eines geeigneten Elektrospinnverfahrens auf industrieller Skala für die Herstellung von Nanofasern.
- Entwicklung und Herstellung einer geeigneten Rezeptur für die Spinnlösung, aus der die Nanofasern hergestellt werden.
- Entwicklung einer geeigneten Kleberrezeptur inkl. eines Auftragungsverfahrens, um die Nanofasern auf dem Trägermaterial zu fixieren (Adhesion).
- Entwicklung eines geeignetes Verfahrens, mit dem die interne Haftung zwischen den einzelnen Nanofasern im Nanofaserweb (Nanofaservlies) erhöht werden kann (Kohäsion), wodurch die mechanische Stabilität des Nanofaservlieses erhöht wird und eine Anwendung in Pulse-Jet-Applikationen ermöglicht wird.
- Die Filtrationseigenschaften der Nanofaservliese zu optimieren und mit schon bestehenden, auf dem Markt verfügbaren Hochtemperaturfiltermedien zu vergleichen,
- Geeignete Substrate für die mechanische Stabilität des Filtermediums zu identifizieren.

### Lösung

### Die Nanofaser

Als Nanofaser wird eine Faser aus P84^{®}-Polyimidfasern verwendet. Die Nanofasern werden durch einen Elektrospinn-Prozeß gewonnen und haben einen Durchmesser von 5 nm bis 1.000 nm, bevorzugt von 10 nm bis 750 nm und ganz besonders bevorzugt von 20 nm bis 550 nm. Der Durchmesser der Nanofasern wird mittels REM-Aufnahmen bei einem Vergrößerungsfaktor von 5.000x gemessen. Bei diesem Verfahren ist besonders darauf zu achten, dass nur Fasern, die sich an der Oberfläche der Aufnahme befinden beurteilt werden.

Das verwendete Polyimid wird von Evonik Fibres in den Handel gebracht und wird durch die Umsetzung von aromatischen Dianhydriden mit aromatischen Diisocyanaten hergestellt.

### Das Herstellungsverfahren der Nanofasern

Die erfindungsgemäß zu verwendenden Nanofasern werden durch einen Elektrospinn-Prozeß hergestellt. Die wesentlichen Elemente des Prozesses sind:
- Herstellung der Elektrospinn-Lösung.
- Verspinnen der Lösung im elektrischen Feld unter definierten Bedingungen und
- Auffangen der gebildeten Nanofasern.

In einem typischen Aufbau einer Elektrospinnanlage wird die zu verspinnende Polymerlösung tropfenweise an einer Elektrode dosiert und durch das elektrische Feld mit typische Spannungen von ca. 1.000 bis 2.000 V/cm von der Elektrode abgezogen und beschleunigt, wobei Spannungen bis zu 4.000 V/cm auch in einigen Fällen verwendet werden. Sobald das elektrische Feld die Viskosität und Oberflächenspannung der Tropfen überwindet, bildet sich ein Jet in Richtung der Gegenelektrode, das Lösungsmittel verdampft und die Fasern werden schließlich auf der Gegenelektrode abgelagert. Als Dosiersystem kann z.B. eine Labor-Dosierspritze verwendet werden. Hierbei wird die zu verspinnende Lösung in die Spritze eingefüllt und die Kanüle unter Spannung gesetzt. Durch eine kontinuierliche und konstante Dosierung bildet sich an der Öffnung der Kanüle ein Tropfen, aus welchem sich die Nanofasern ab einer gewissen Spannung bilden. Als Gegenelektrode kann z.B. ein höhenverstellbarer Tisch verwendet werden. Hierbei ist darauf zu achten, dass es auch möglich sein muss diese Gegenelektrode entweder zu erden oder unter Spannung zu setzen. Auf der Gegenelektrode bildet sich dann ein Vlies bestehend aus Nanofasern.

Bei dem Elektrospinnen von Polymerlösungen, und besonders bei P84^{®}-Lösungen, ist generell darauf zu achten, dass Faktoren wie die Polymerkonzentration, Spannung, Luftfeuchte, Abstand der Elektroden, die

Strömungsverhältnisse in der Spinnkabine und die Verwendung eines Tensids einen großen Einfluss auf den Elektrospinnprozess sowie die Eigenschaften der hergestellten Nanofasern haben.

Zur Erhöhung der Kohäsion (interne Haftung Nanovlies) kann sich gegebenenfalls eine thermische Nachbehandlung des Nanovlies bei 280 bis 350°C für 1 bis 30 min anschließen.

### Herstellen der Lösung

Das Polymer wird beispielsweise in Dimethylformamid (DMF) oder einem anderen polaren aprotischen Lösungsmittel gelöst.

Als Lösungsmittel können Harnstoffe wie z.B. N,N-Dimethyltetrahydropyropyrimidinon, Sulfolan, N,N,-Dimethylformamid, N,N,-Dimethylacetamid, N-Methylpyrrolidon, N-Ethylpyrrolidon und Dimethylsulfoxid verwendet werden. Ferner besteht die Möglichkeit, andere Lösungsmittel mit bis zu 60 Gew.-% bis 80% Gew.-% Gehalt dazuzumischen ohne dass das Polymer ausfällt. Mögliche Lösungsmittel hier sind Tetrahydrofuran, 1,4-Dioxan, Toluol, Xylol, Aceton, Butanon und Alkohole (≤ 10 Gew.-%). Der Gehalt an Polymer in der Lösung beträgt zwischen 5 m-% und 25 m-%, bevorzugt zwischen 10 m-% und 20 m-% und ganz besonders bevorzugt zwischen 12,5 m-% und 20 m-% (m-% ist Massenprozent).

Die Lösung kann ferner ein Tensid enthalten. Es sind sowohl kationische als auch anionische Tenside einsetzbar, ferner amphotere Tenside.

Als anionische Tenside können Alkylsulfonate, wie beispielsweise Natriunlaurylsulfonat oder
Alkylbenzolsulfonate wie beispielsweise
Natriumdodecylbenzolsulfonat eingesetzt werden.

Als kationische Tenside können beispielsweise quartäre Ammoniumverbindungen (QUATS) eingesetzt werden, wie beispielsweise Cetyltrimethylammoniumbromid oder Distearyldimethylammoniumchlorid eingesetzt werden.

Als amphotere Tenside können Betaine oder Sultaine eingesetzt werden.

Der Gehalt an Tensid beträgt zwischen 15 Gew.-‰ und 0,01 Gew.-‰, bevorzugt zwischen 12 Gew.-‰ und 0,75 Gew.-‰ und ganz besonders bevorzugt zwischen 2,5 Gew.-‰ und 1 Gew.-‰, bezogen auf die Lösung des Polyimids im polaren, aprotischen Lösungsmittel.

### Der Kleber

Als Kleber kann man Epoxidkleber, Siliconkleber, Polyimidkleber oder Kleber auf Maleinimimid-Basis einsetzen.

Die Kleber müssen bis zu ca. 260 Grad Celsius temperaturbeständig sein und ausreichend hohe Haftwerte aufweisen. Der Kleber muss, abhängig von den Einsatzbedingungen für eine Haftung über wenige Monate bis hin zu mehreren Jahren ohne ein Ablösens des Nanofaservlies von dem Substrat sorgen. Fälle bei denen Pulse-Jet Filtermedien bis 11 Jahren im Einsatz waren liegen vor, aber typische Einsatzdauern sind ca. 2 bis 4 Jahre. Über diesen Zeitraum wird das Filtermedium mehreren 10.000 Reinigungspulse ausgesetzt und auch am Ende der Einsatzzeit muss eine hohe Haftung zwischen Substrat und Nanofaservlies vorhanden sein. Der Pulse-Jet-Reinigungsdruck kann bis zu 6,0 bar Druck betragen und kurzfristig sogar auf bis zu 7,5 bis 8,0 bar erhöht werden. Üblicherweise liegt der Reinigungsdruck jedoch in der Größenordnung von ca. 3,5 bis 4,5 bar bei Ventilöffnungszeiten von ca. 0,1s bis max. 0,5 s. Diese angegebenen Werte sind jedoch stark abhängig von dem verwendeten System und den Einsatzbedingungen.

Als Silikonkleber können sowohl neutralvernetzende als auch essigsäurevernetzende Kleber eingesetzt werden.

### Auftragung des Klebers

Zum Auftragen des Klebstoffes auf die zu fügende Fläche stehen dem Fachmann eine Vielzahl von Methoden zur Verfügung, die klebstoffspezifisch ausgewählt werden können, wie beispielsweise:
- Raupenauftrag
- Aufrakeln
- Breitschlitzdüsenauftrag
- Walzenauftrag
- Sprühauftrag
- Spritzauftrag
- Fliessbalken
- Siebdruckauftrag
- Verwirbeln
- Aufschleudern
- Klebfilmapplikation

Die Auftragsmethode muss berührungsfrei sein.

Die einzelnen Methoden unterscheiden sich zusätzlich durch die Auftragstemperaturen und den zur Anwendung kommenden Drücke. Die rheologischen Eigenschaften der Klebstoffe sind dafür entscheidend.

Eine wichtige Forderung im Fall der Filtervliesverklebung ist selbstverständlich die, dass nach dem Verkleben ein Durchströmen der Abgasluft durch die beiden Filtervliese (Substrat und Nanofaservlies) immer noch gut möglich sein muss. Damit scheiden die meisten Standardauftragsverfahren wie Raupenauftrag mit anschliessendem Verpressen, Filmauftrag etc. aus. Als aussichtsreichste Verfahren sollten zunächst Sprühauftrag, bzw. Verwirbelung oder Siebdruck in die engere Wahl kommen.

Im Fall hochviskoser Klebstoffe, insbesondere auch bei Schmelzklebstoffen, kommt es nicht zum echten Sprühen mit Tröpfchenbildung, sondern eher zu einem Verwirbeln mit leichter Fadenstruktur, die je nach Auftragsbedingungen (Temperatur, Druck, Düsendesign, Austragsmenge pro Zeit) zu einer non-woven/vlies-ähnlichen Struktur führt.

Damit wäre eine strömungshindernde, flächige Verklebung ausgeschlossen. Die meisten Auftragsgeräte für diese Anwendungsart sind in erster Linie für
Schmelzklebstoffauftrag gedacht, doch sind sie genau so für höherviskose Klebstoffe/Dichtstoffe bei niedrigeren Temperaturen geeignet. Zu achten ist darauf, dass das Auftragssystem für luftfeuchtende Produkte geeignet ist (die meisten Schmelzklebstoffe sind nicht reaktiv).

Beim Sprühauftrag des Klebers wird der Silikonkleber in einem Lösungsmittel, beispielsweise in Toluol, gelöst und z.B. mittels einer handelsüblichen Spritzpistole aufgetragen. Die Konzentration des Klebers in der Lösung wird so eingestellt, daß sich eine gut sprühbare Lösung ergibt und beträgt beispielsweise 20 m-% (Massenprozent).

Als Klebersysteme kommen beispielsweise Silikonkleber in Frage, wobei die Kleber neutralvernetzend oder essigsäurevernetzend sein können. Als neutralvernetzender Kleber kommen beispielsweise der Kleber Dow Corning^{®} Hi-Temp Silicone Sealant oder WIKOSIL^{®}-HTN in Frage. Als essigsäurevernetzender Kleber kommt beispielsweise der Kleber Dyna-Pro^{©} Fire Resistant Sealant in Frage. Als Epoxidkleber kommt ECCOBOND^{®} 104 A/B und als Polyimidkleber kommt KYOWA^{®} PL32 in Betracht.

Die Spezifikation der Kleber:
Dehnspannungswert bei 100% (DIN 53504, S3A): 0,2 N/mm² bis 2,0 N/mm².
Reißdehnung (DIN 43504, S3A): 100 % bis 600 %.
Zugfestigkeit (DIN 53504, S3A): 0,2 N/mm² bis 4,5 N/mm².

Chemische Beständigkeit der Kleber: Dauerbeständigkeit gegen Hydrolyse, saure und basische Umgebungen (pH-Werte 2 bis 12) sowie typische Abgase wie z.B. SO₂, CO, CO₂ oder NO₂ bei Temperaturen bis 260°C. Unter diesen Bedingungen muss der Kleber für die ganze Einsatzdauer des Pulse-Jet-Mediums für eine hohe Haftung zwischen Nanovlies und Substrat sorgen. Die zwei Lagen dürfen sich nicht trennen.

Temperaturanforderung: Temperaturbeständig bis eine Dauertemperatur von 260°C.

### Das Substrat

Das Substrat dient der mechanischen Stabilität des Filtermediums und besteht z.B. aus einem Gewebe oder Nonwoven aus den Materialien Polyimid, Aramid, Glasfaser bzw. Glasfaser beschichtet mit PTFE, Polyphenylensulfid oder PTFE.

Das Substrat verfügt typischerweise über eine Luftdurchlässigkeit von 5 l/hcm² bis 400 l/hcm², eine Dicke von 0,1 mm bis 5 mm und ein Flächengewicht von 100 g/m² bis 850 g/m².

### Beispiele

### Herstellung der Filtermedien

Die Filtermedien bestehen aus den P84^{®}-Nanofasern und dem Filterträger. Die Filtermedien werden folgendermaßen hergestellt:
Die P84^{®}-Nanofasern werden nach dem oben beschriebenen Elektrospinn-Prozeß hergestellt.
Die Dicke der P84^{®}-Nanofaserschicht beträgt zwischen 20 nm und 1000 nm, bevorzugt zwischen 30 nm und 800 nm und ganz besonders bevorzugt zwischen 50 nm und 700 nm.
Die P84^{®}-Nanofaserschicht wird mittels eines Klebers auf dem Filterträger befestigt. Als Kleber wird ECCOBOND^{®} 104 A/B, oder Dow Corning^{®} Hi Temp Silicone Sealant eingesetzt.

Als Filterträger dienen Polyimidfasern, Glasfasern oder PTFE-Fasern. Die Dicke des Filterträgers beträgt zwischen 0,1 mm und 6,0 mm, bevorzugt zwischen 0,2 mm und 4,0 mm und ganz besonders bevorzugt zwischen 0,4 mm und 2,5 mm.

Für die Überprüfung der Filtrationseigenschaften der P84^{®}-Nanofaservliese wurde ein Prüfstand ähnlich VDI 3926 Typ 2 gebaut. Die Hauptunterschiede zwischen der VDI 3926 Typ 2 Norm und dem gebauten Prüfstand sind die Dimensionen der Roh- und Reingaskanäle, die kleiner sind als in der VDI 3926 Typ 2 beschrieben. Ein weiterer Unterschied ist, dass in dem Reinigungssystem keine Druckbehälter eingebaut wurden. In dem Prüfablauf wurde zusätzlich zu den Filtrationsphasen 1 bis 4 eine Phase 5 eingeführt, bei der beim Erreichen eines Differenzdrucks von 1.800 Pa eine Abreinigung durchgeführt wird und die Prüfdauer beträgt 2 Stunden. Zusätzlich wurde eine höhere Partikelkonzentrationen im Rohgas und ein niedriger Reinigungsdruck bei längeren Ventilöffnungszeiten benutzt.

Zusätzlich wurde ein nach VDI 3926 Typ 2 gebauter Prüfstand verwendet. In den Versuchen auf diesem Prüfstand wurde nur Phase 1, wie beschrieben in VDI 3926 für die Überprüfung der Filtrationseingeschaften der Filtermedien verwendet.

Ergebnisse:
Ergebnisse der Elektrospinnversuche in Abhängigkeit vom eingesetzten Tensid.

Der Spinnvorgang im Labormaßstab erfolgte aus einer Polymerlösung mit einem Gehalt von 15 mol-% Polymer in DMF, der Tensidgehalt der Polymerlösung betrug 1 Gew.-‰. An der Düse lag eine Spannung von - 30 kV an und auf dem Auffangtisch mit Substrat war die Erdung angeschlossen, die Temperatur im Spinnraum betrug 22 Grad Celsius und die relative Luftfeuchtigkeit lag zwischen 26% und 30 %.

| **Beispiel Nr.** | **Tensid** | **Faserdurchmesser (nm)** | **Slip-flow-Effekt vorhanden?** | **Bewertung** |
|---|---|---|---|---|
| 1 | Natriumdodecyl-benzolsulfonat | 240 - 700 | ✔ 1.) | Segelbildung und keine Beads |
| 2 | Cetryltrimethyl-ammoniumbromid | 230 - 575 | ✔ | Segelbildung und keine Beads |
| 3 | - ohne Additiv - | 350 - 575 | ✔ | Segelbildung und keine Beads, der Spinnprozess ist nicht stabil |
| 4 | Benztriethylam-moniumbromid | 245 - 500 | ✔ | Segelbildung und keine Beads |
| 5 | Tetrabutylammo-niumbromid | 230 - 580 | ✔ | Segelbildung und keine Beads |
| 6 | Natriumdodecyl-sulfat | 240 - 475 | ✔ | keine Segelbildung und keine Beads |

| | | | | |
|---|---|---|---|---|
| 1.) Der Faserdurchmesser von 700 nm stellt eine seltene Ausnahme dar. | | | | |

Unter "Segelbildung" wird die Bildung eines luftundurchlässigen Polymerfilms zwischen zwei Fasern verstanden.

Beads: Unter Beads ist eine Veränderung der idealen Fasermorphologie durch das Erscheinen von Verdickungen zu verstehen.

### Ergebnisse der Klebeversuche

Die Silikonkleber wurden in Toluol gelöst, die Konzentration der Lösung betrug 20 Gew.-%, die Lösung wurde im Sprühverfahren aufgetragen.

Epoxid-, Maleinimid- und Polyimidkleber wurden auch mittels einer Sprühverfahrens aufgetragen.

| **Beispiel** | **Klebesystem** | **Lieferant** | **Substrat** | **Haftung** | **Bewertung** |
|---|---|---|---|---|---|
| 1 | Silikon, neutralvernetzend, Dow Corning^{®} Hi-Temp Silicone Sealant | Dow Corning | P84^{®}-Gewebe | ja | Kleber geeignet |
| 2 | Silikon, neutralvernetzend, WIKOSIL^{®} HNT | WISABAX | P84^{®}-Gewebe | ja | Kleber geeignet |
| 3 | Silikon, essigsaurevernetzend, Dyna-Pro^{©} Fire Resistant Sealant | Saber Industrial | P84^{®}-Gewebe | ja | Kleber geeignet |
| 4 | Epoxidkleber, ECCOBOND^{®} 104 A/B | Bayer AG | P84^{®}-Gewebe | ja | Kleber geeignet |
| 5 | Maleinimid C-P500 | Evonik Industries | P84^{®}-Gewebe | nein | Kleber ist nicht geeignet |
| 6 | Polyimidkleber, KYOWA^{®} P132 | KYOWA | P84^{®}-Gewebe | nein | Kleber ist nicht geeignet |

## Patentansprüche

1. Das Verfahren zur Herstellung eines Filterbauteils, das aus einem Substrat und einen Nanofaservlies aus einem aromatischen Polyimid aufgebaut ist, umfassend folgende Schritte:
a. Herstellung des Nanofaservlieses aus einer Lösung mit Hilfe eines Elektrospinnverfahrens und
b. Die Auftragung und Fixierung der in Schritt a. hergestellten Nanofasern auf einem Substrat.

2. Verfahren zur Auftragung und Fixierung des Nanofaservlieses nach Anspruch 1 auf der Anströmseite des Substrats mit Hilfe eines Klebers mit einem Dehnspannungswert bei 100% von 0,2 N/mm² bis 2,0 N/mm², einer Reißdehnung von 100 bis 600 %, einer Zugfestigkeit von 0,2 N/mm² bis 4,5 N/mm² und einer Temperaturbeständigkeit von mindestens 260°C.

3. Elektrospinnverfahren zur Herstellung eines Nanofaservlieses mit folgenden Merkmalen:
• Herstellung einer Lösung von einem Polyimid in einem polaren, aprotischen Lösungsmittel mit einem Gehalt von 5 m-% bis 25 m-%, (Masseprozent)
• optionaler Zugabe eines Tensids in Mengen von 15 m-‰ und 0, 01 m-‰, (Massepromille)
• einem elektrischen Feld der Feldstärke zwischen 1.000 V/cm und 4.000 V/cm.

4. Nanofasern, erhältlich nach einem Verfahren des Anspruchs 3.

5. Nanofasern, erhältlich nach einem Verfahren des Anspruchs 3 mit einem Faserdurchmesser von 50 nm bis 650 nm, einem Flächengewicht von 5 mg/m² bis 30 g/m², einer Dicke von 50 nm bis 0,5 mm und einer Porengrößenverteilung von 0,01 µm bis 100 µm.

6. Substrat nach Patentanspruch 1, **dadurch gekennzeichnet, dass** es aus den Materialien Polyimid, Aramid, Glasfaser, PTFE oder Polyphenylensulfid bzw. Kombinationen hiervon zusammengesetzt ist.

7. Substrat nach Patentanspruch 1, **dadurch gekennzeichnet, dass** es entweder ein Gewebe oder ein Nonwoven ist.

8. Substrat nach Patentanspruch 1, **dadurch gekennzeichnet, dass** es eine Luftdurchlässigkeit von 5 bis 400 l/hcm², einer Dicke von 0,1 bis 5 mm und einem Flächengewicht von 100 bis 850 g/m² aufweist.

9. Filterbauteil gemäß Anspruch 1, **dadurch gekennzeichnet, dass** es zu einem Filterschlauch geformt ist.

10. Filterbauteil gemäß Anspruch 1, **dadurch**
**gekennzeichnet, dass** sich das Nanofaservlies nach Ablauf der in VDI 3926 beschriebenen Prüfphasen 1 bis 4 nicht von dem Substrat trennt.

11. Verfahren zur Erhöhung der Kohäsion des Nanovlieses
durch eine thermische Verarbeitung bei 280 bis 350°C für 1 bis 30 min.

12. Nanovlies mit erhöhter Kohäsion, erhältlich nach
einem Verfahren des Anspruchs 11.

13. Elektrospinnbare Lösung eines Polymers in einem
aprotischen, polaren Lösungsmittel mit folgender Zusammensetzung:
c. die Konzentration des Polyimid beträgt 10 m-% bis 20 m-% (Massenprozent).
d. optionale Zugabe eines Tensids mit einer Massenkonzentration von 0,75 m-‰ bis 12 m-‰ (m-‰. bedeutet Massepromille, bezogen auf a.)
